Europäisches Patentamt

European Patent Office

Office européen des brevets

(11) Publication number: **0 189 666**

**A1**

(12) # EUROPEAN PATENT APPLICATION

(21) Application number: **85309294.8**

(22) Date of filing: **19.12.85**

(51) Int. Cl.⁴: **G 02 B 6/44**

(30) Priority: **24.01.85 GB 8501790**

(43) Date of publication of application:
**06.08.86 Bulletin 86/32**

(84) Designated Contracting States:
**DE FR IT NL SE**

(71) Applicant: **PIRELLI GENERAL plc**
**40 Chancery Lane**
**London WC2A 1JH(GB)**

(72) Inventor: **Emery, Kenneth Robert**
**36, St. Stephen's Road**
**Winchester Hampshire, SO22 6DE(GB)**

(74) Representative: **Abbie, Andrew Kenneth et al,**
**A.A. THORNTON & CO. Northumberland House 303/306**
**High Holborn**
**London, WC1V 7LE(GB)**

(54) Optical fibre cables.

(57) An optical fibre cable comprises a plastics extrusion comprising a plurality of tubes 1 disposed about a central elongate member 2 and connected to the member along the length thereof. At least some of the tubes 1 contain at least one optical fibre 3. The central elongate member 2 forms a tubular covering of a tensile resistant member 5 and the cable is provided with protective sheathing means 7.

## - 1 -
### Optical Fibre Cables

This invention relates to optical fibre cables.

It is known to provide an optical fibre cable by laying up a plurality of separate tubes, each housing one or more optical fibres, around a central elongate member. Typically the central elongate member is an insulated stranded wire member which provides the cable with its tensile strength. Also, typically, insulated electrical conductors may be laid up around the central member with the tubes and fillers, for example of plastics, applied between the tubes and any insulated conductors present. The resulting core may then be provided with a sheathing means.

An object of the present invention is to reduce the number of manufacturing operations required to produce an optical fibre cable.

The invention provides an optical fibre cable comprising a plastics extrusion comprising a plurality of tubes extending helically about a central elongate member and connected to the member along the length thereof by respective webs, at least some of the tubes having at least one optical fibre loosely housed therein.

As will be appreciated the step of laying up the tubes which house the optical fibres around the central member is eliminated by the present invention since these tubes are extruded integrally with the central member of the cable.

Each tube may extend helically around the central member alternately in one sense and then the other sense - that is in a so-called 'S-Z' configuration.

Preferably, the central elongate member forms a tubular covering of a tensile resistant member. This tensile resistant member may comprise stranded compacted steel wires. Alternatively it may comprise other tensile resistant materials, for example carbon fibres or polyaramid fibres.

However, it is to be understood that as an alternative or addition to the tensile resistant member the cable may comprise tensile resistant means which extend along the length of the cable radially outwardly of the tubes.

Preferably a sheathing means extends along the length of the cable radially outwardly of the tubes. This sheathing means may comprise a plastics extrusion or a plastics/metal laminate. Such a laminate may be provided inwardly of an extruded plastics sheath.

The cable may include at least one insulated electrical conductor. The or each insulated electrical conductor provided may be disposed between adjacent tubes or the or each electrical conductor may extend within a said tube and be insulated thereby.

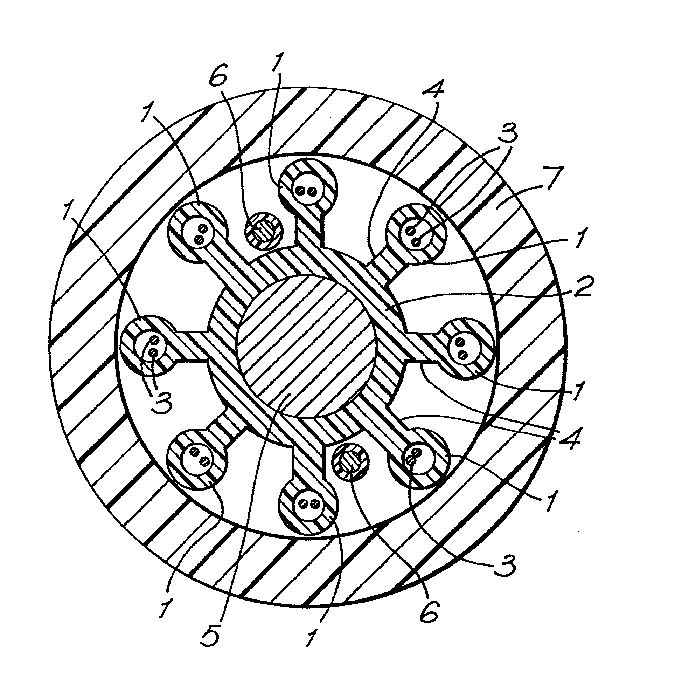

In order that the invention may be well understood, an embodiment thereof, which is given by way of example only, will now be described with reference to the accompanying drawing which shows a sketch of a radial cross-section of an optical fibre cable.

The illustrated cable has a plastics extrusion of, say, polyethylene or polypropylene, which comprises a plurality of tubes 1 disposed about a central elongate member 2 and connected to the member 2 along the length thereof. In the embodiment, eight tubes 1 are provided

0189666

and each contains two optical fibres 3. However, it is to be understood that a different number of tubes may be provided and not all of the tubes 1 need contain optical fibres. However, at least some of the tubes will contain at least one optical fibre. The optical fibres 3 are a loose fit within their respective tubes 1.

Each tube 1 is connected to the elongate member 2 by a respective radial web 4. The provision of these web interconnections between the tubes and elongate member enable the former to be readily separated from the latter over predetermined lengths of the cable to allow for jointing or terminating of the cable. The webs may be constructed to tear or may be cut to provide this separation.

Although not discernible from the cross-sectional view illustrated, each tube 1 extends helically around the central member 2 alternately in one sense and then the other sense as it extends along the length of the central member. That is the tubes have a so-called 'S-Z' lay configuration. Alternatively, the tubes 1 may extend helically around the central member 2 in one sense only. In either case, the helical disposition of the tubes about the central member may be achieved either by using relatively rotatable dies in the extruder head, or by causing the central member 2 to twist relative to the tubes 1 during the extrusion process.

It will be appreciated that a reason for helically disposing the tubes about the central member is to reduce the difference in strains thereto which would occur between tubes on the outside and inside of a bend in the cable if the tubes extended parallel to the central longitudinal axis of the central member 2.

As illustrated, the central elongate member 2 of the extrusion forms a tubular covering of a tensile resistant member 5, which comprises stranded compacted steel wires, and which provides the cable with appropriate tensile strength. It will be appreciated that the tensile resistant member may comprise other tensile resistant materials, such as carbon fibres or polyaramid fibres, for example of KEVLAR (trade name).

It will be appreciated that the optical fibres 3 and the tensile resistant member 5 are fed into the upstream side of the extruder head into respective passages therein such that the tubes 1 and covering 2 are formed about them. It is envisaged that a water repellant material, such as petroleum jelly, may be fed into the appropriate passages in the extruder head together with the optical fibres to form a water barrier within the tubes 1. It is preferred to arrange for the fibres 3 to be longer than the tubes 1 within which they are loosely housed. This may be achieved, for example, by feeding the fibres into the extruder head at a faster rate than the extrusion rate. Alternatively, the tensile resistant member 5 may be temporarily elongated when fed into the extruder head, for example by mechanical stretching or heating, and allowed to recover downstream of the extruder.

The cable also may comprise at least one insulated electrical conductor. As shown two insulated electrical conductors 6 of copper are disposed between adjacent tubes 1 of the cable. Alternatively, it is envisaged that if there are tubes 1 in the cable not required to house optical fibres, uninsulated copper conductors may extend within such tubes and be insulated thereby. Of course, insulated copper conductors may also extend within any tubes 1 not required to house optical fibres.

The arrangement thus far described is provided with a protective sheathing means, illustrated as a simple plain sheath 7 in the drawing. This sheathing means may take numerous forms depending upon operational requirements and may comprise one or more layers. Also because of the regular shape presented by the eight equally circumferentially spaced tubes 1 the need to use fillers may be avoided.

The sheathing means 7 comprises a plastics extrusion of for example polyethylene or polyvinylchloride, in which case desirably a heat barrier is provided over the tubes for protecting the same during sheathing. The heat barrier may comprise a belt formed of paper, plastics or a composite material. An example of a suitable form of material is corrugated polyethylene teraphthalate for example MELINEX (R.T.M) or MYLAR (R.T.M). As an alternative to providing a heat barrier in the form of a belt, the cable core may be dusted with talc prior to sheathing.

The sheathing means 7 may also comprise a water barrier formed by a longitudinally wrapped plastics/metal laminate for example of polyethylene and aluminium. Such a water barrier may have a polyethylene sheath extruded over it.

The sheathing means 7 may also include a flame retardent/so-called 'low smoke zero halogen' layer.

The sheathing means may also provide the cable with tensile resistant means, for example by including a plastics/steel/plastics laminate wrapped longitudinally and having a plastics sheath extruded thereover, or by including external armouring which also serves to provide the cable with tensile resistance. When the sheathing means includes tensile resistant means the central tensile resistant member 5 may be included or omitted. If omitted, the central member 2 of the plastics extrusion may be solid.

- 6 -
0189666

CLAIMS:

1.      An optical fibre cable comprising a plastics extrusion comprising a plurality of tubes extending helically about a central elongate member and connected to the member along the length thereof by respective webs, at least some of the tubes having at least one optical fibre loosely housed therein.

2.      An optical fibre cable as claimed in claim 1, wherein each tube extends helically around the central member alternately in one sense and then the other sense.

3.      An optical fibre cable as claimed in claim 1 or 2, wherein said central elongate member forms a tubular covering of a tensile resistant member.

4.      An optical fibre cable as claimed in claim 3, wherein said tensile resistant member comprises stranded compacted steel wires.

5.      An optical fibre cable as claimed in any one of the preceding claims, wherein tensile resistant means extend along the length of the cable radially outwardly of the tubes.

6.      An optical fibre cable as claimed in any one of the preceding claims, wherein a sheathing means extends along the length of the cable radially outwardly of the tubes.

7.      An optical fibre cable as claimed in claim 6, wherein said sheathing means comprises a plastic extrusion.

8.      An optical fibre cable as claimed in claim 6 or 7, wherein said sheathing means comprises a metal/ plastics laminate.

9.      An optical fibre cable as claimed in any one of the preceding claims, wherein said cable includes at least one insulated electrical conductor.

10.     An optical fibre cable as claimed in claim 9, wherein the or each insulated electrical conductor is disposed between adjacent tubes along the length of the cable.

11.     An optical fibre cable as claimed in claim 9, wherein the or each electrical conductor extends within a said tube and is insulated thereby.

12.     An optical fibre cable substantially as herein described with reference to the accompanying drawing.

European Patent
Office

**EUROPEAN SEARCH REPORT**

0189666

Application number

EP 85 30 9294

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-4 188 088 (A. ANDERSEN et al.) <br> * Column 2, lines 26-41; column 3, line 16 - column 4, line 26; figures 1-7 * | 1-8 | G 02 B 6/44 |
| A | GB-A-2 123 164 (STANDARD TELEPHONES AND CABLES) <br> * Page 1, lines 39-55; figures 1,2 * | 9-11 | |
| P,A | FR-A-2 551 253 (LIGNES TELEGRAPHIQUES ET TELEPHONIQUES) | | |
| A | FR-A-2 393 503 (LES CABLES DE LYON) | | |
| | ----- | | |

**TECHNICAL FIELDS SEARCHED (Int. Cl.4)**

G 02 B 6/00

The present search report has been drawn up for all claims

| Place of search | Date of completion of the search | Examiner |
|---|---|---|
| THE HAGUE | 25-04-1986 | POPINEAU G.J.P. |